**Europäisches Patentamt**

**European Patent Office**

**Office européen des brevets**

(11) Veröffentlichungsnummer: **0 217 086**
**B1**

# EUROPÄISCHE PATENTSCHRIFT

(45) Veröffentlichungstag der Patentschrift:
**14.09.88**

(21) Anmeldenummer: **86111197.9**

(22) Anmeldetag: **13.08.86**

(51) Int. Cl.⁴: **F 16 G 13/16**

(54) **Energieführungskette.**

(30) Priorität: **04.10.85 DE 8528258 U**

(43) Veröffentlichungstag der Anmeldung:
**08.04.87 Patentblatt 87/15**

(45) Bekanntmachung des Hinweises auf die Patenterteilung:
**14.09.88 Patentblatt 88/37**

(84) Benannte Vertragsstaaten:
**DE FR GB IT**

(56) Entgegenhaltungen:
**EP - A - 0 126 862**
**DE - A - 2 134 878**
**DE - A - 2 221 826**
**FR - A - 2 200 929**
**FR - A - 2 206 824**

(73) Patentinhaber: **Kabelschlepp Gesellschaft mit beschränkter Haftung, Marienborner Strasse 75, D-5900 Siegen 1 (DE)**

(72) Erfinder: **Moritz, Werner, Wetzlarer Strasse 122, D-5900 Siegen (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

## Beschreibung

Die Erfindung betrifft eine Energieführungskette zum Führen von Energieleitern, insbesondere Kabel und Schläuche von einem festen Anschluss zu einem beweglichen Verbraucher, bestehend aus einer Vielzahl von Kettengliedern aus einem U-förmigen Aufnahmeteil, dessen Schenkel Aussenlaschen bilden und einem Schliessbügel, der mit den freien Kanten bzw. Seiten der Aussenlaschen verbindbar ist.

Aus der DE-A-3 318 365 (EP-A-0 126 862) ist bereits eine gattungsgemässe Energieführungskette bekannt, deren Aufnahmeteil mit einem Schliessbügel verschliessbar ist, der an einer Aussenlasche mit einem Scharnier angelenkt und an der anderen Aussenlasche mit einem elastischen Haken verriegelbar ist. Die Kettenglieder können nach Öffnen des Schliessbügels montiert bzw. demontiert werden, ohne dass dazu die Energieversorgungskette in Einzelteile zerlegt werden muss. Die Tragfähigkeit dieser Energieführungskette ist dennoch beträchtlich. Sie hat jedoch den Nachteil, dass die Energieleiter innerhalb des Aufnahmeteils verschieblich sind, so dass im Betrieb Reibungskräfte, Zugkräfte und stossförmige Belastungen einen beträchtlichen Verschleiss von Energieleitern und Kettengliedern bewirken können.

Aus der DE-C-2 255 283 (FR-A-2206 824) ist eine Energieführungskette bekannt, deren Aussenlaschen mit wenigstens zwei Traversen verbunden sind, zwischen denen Trennstege für die Energieleiter angeordnet sind. Die Traversen haben einen abgeflachten Querschnitt mit abgerundeten Schmalseiten und in den Trennstegen sind am oberen und unteren Ende mit Hinterschneidungen versehene, angeschnittene Ausnehmungen angeordnet, so dass die Traversen nach dem Einlegen in die Ausnehmungen durch Verdrehen um ihre Längsachse kraft- und formschlüssig mit den Trennstegen verspannbar sind. Bei dieser Energieführungskette werden die Aussenlaschen und die Traversen aus Gründen der Stabilität aus Metall hergestellt, wodurch sehr hohe Kettengewichte erreicht werden. Ein weiterer Nachteil dieser bekannten Energieführungskette besteht darin, dass ihre Kettenglieder aus einer Vielzahl von Einzelteilen zusammengesetzt werden müssen. Es kommt noch hinzu, dass die Energieleiter durch die Trennstege zwar vor gegenseitiger Berührung geschützt sind, im Betrieb aber Abnutzungen infolge der Relativbewegungen zu den Trennstegen und Traversen unterliegen.

Davon ausgehend liegt der Erfindung die Aufgabe zugrunde, eine Energieführungskette mit Kettengliedern zu schaffen, die aus wenigen Teilen bestehen, eine hohe Stabilität und ein geringes Gewicht haben, die einzeln montierbar bzw. demontierbar sind und die Energieleiter mit höchst unterschiedlichen Abmessungen und Oberflächen sowohl spielarm, als auch reibungsarm führen, wobei der betriebliche Verschleiss vernachlässigbar gering ist.

Zur technischen Lösung dieser Aufgabe wird vorgeschlagen, dass bei geöffnetem Schliessbügel eine komplementär geformte Kassette in das Aufnahmeteil einsetzbar ist, die bei geschlossenem Schliessbügel an ihrem Umfang allseitig abgestützt ist, dass die Kassette bei geschlossenem Schliessbügel über Führungselemente — beispielsweise Führungsstege und Führungsnuten — formschlüssig mit dem Kettenglied verbunden ist und dass die Kassette mit Durchbrüchen verbunden ist, die bei formschlüssig verbundener Kassette auf die Längsachse der gestreckten Energieführungskette ausgerichtet sind und die Energieleiter aufnehmen.

Diese Energieführungskette hat die Vorteile, dass das Aufnahmeteil und der Schliessbügel einen Grundkörper bilden, in den dem jeweiligen Anwendungsfall angepasste Kassetten eingeschoben werden können. Auf der einen Seite denkbarer Anwendungsfälle ist es bei geringen Belastungen von Energieleitern und Kettengliedern möglich, die Kettenglieder ohne Kassetten zu betreiben. Auf der anderen Seite können die Kettenglieder bei ungünstigen Betriebsbedingungen mit Kassetten versehen werden, die gezielt als auswechlungsfähiges Verschleissteil, vorgesehen sind. Auch sind Anwendungsfälle denkbar, in denen nur manche Kettenglieder mit einer Kassette bestückt sind. Ein besonderer Vorteil besteht darin, dass der Grundkörper hinsichtlich der Stabilität und der kinematischen Eingeschaften der Energieführungskette optimiert werden kann und unabhängig davon eine Optimierung der Kassette hinsichtlich einer verschleissarmen Führung der Energieleitungen möglich ist. Da eine klare Trennung der Funktionen von Grundkörper und Kassette vorliegt, entfällt eine — bislang vielfach notwendige — Bearbeitung des Grundkörpers, wodurch in jedem Anwendungsfall von einer gleichbleibenden Stabilität der Energieführungskette ausgegangen werden kann. Hinsichtlich des Grundkörpers hat der Hersteller von Energieführungsketten den Vorteil eines vereinheitlichten Produktionsprogrammes und einer vereinfachten Lagerhaltung. Die Kassetten können den jeweiligen Kundenwüschen entsprechend kostengünstig aus einem Kunststoff gespritzt werden, wobei die Spritzform lediglich hinsichtlich der Durchbrüche dem jeweiligen Anwendungsfall angepasst werden muss. Durch das nahezu vollständige Ausfüllen des Kastenquerschnittes der Kettenglieder mit der Kassette wird als zusätzlicher Vorteil eine Verbesserung der Verwindungssteifigkeit der Energieführungskette erreicht.

Eine Demontage bzw. Montage einzelner Kettenglieder und das Nachrüsten der Energieführungskette mit weiteren Energieleitern ist möglich, ohne dass die Energieführungskette in ihre Kettenglieder zerlegt werden muss.

Bei einer Ausgestaltung der Erfindung ist vorgesehen, dass die Kassette an mindestens zwei gegenüberliegenden Umfangsseiten über Führungsstege und Führungsnuten mit dem Aufnahmeteil bzw. dem Schliessbügel verbunden ist. Hierdurch wird eine gleichmässige Krafteinleitung von der Kassette in das Kettenglied erreicht.

Bei einer weiteren Ausgestaltung ist vorgesehen, dass die Kassette mit einem Raststeg und einer Rastnut an der Basis des Aufnahmeteils verrastbar ist. Durch die Verrastung wird einerseits die von der Kassette auf den Schliessbügel ausgeübte Kraft vermindert und andererseits die Unverlierbarkeit der vormontierten Kassette auch bei geöffnetem Schliessbügel gewährleistet.

Bei einer weiteren Ausgestaltung ist vorgesehen, dass bei formschlüssig verbundener Kassette die Durchbrüche mit ihren Symmetrieachsen von einer beide Gelenkachsen des Kettengliedes schneidenden Ebene einen Abstand haben, bei dem im Krümmungsradius der Energieführungskette die Bogenlänge der Energieleitungen genau der Kettenteilung entspricht. Dies hat eine Minimierung der Relativbewegung der Energieleiter zur Folge, da diese in der neutralen Faser der Kettenglieder geführt werden.

Bei einer weiteren Ausgestaltung ist vorgesehen, dass die Kassette aus einem weichen und gegenüber den Energieleitern besonders glatten Kunststoff — beispielsweise Polyäthylen — besteht, wodurch der Verschleiss der Energieleiter erheblich gemindert wird.

Bei einer weiteren Ausgestaltung ist vorgesehen, dass die Kassette in einer Ebene teilbar ist, welche die Durchbrüche in Längsausdehnungsrichtung vollständig schneidet, wodurch die Kassette in ein Oberteil und ein Unterteil zerlegbar ist. Durch Vormontage des Unterteils wird das Einsetzen der Energieleiter erheblich vereinfacht.

Bei einer weiteren Ausgestaltung ist vorgesehen, dass das Oberteil und das Unterteil an ihren gegeseitigen Kontaktflächen komplementär ausgebildete Führungselemente — beispielsweise Führungsstifte und Führungslöcher — haben. So können Oberteil und Unterteil unverlierbar vormontiert werden.

Schliesslich ist bei einer Ausgestaltung der Erfindung vorgesehen, dass der Schliessbügel an einer Aussenlasche drehbar angelenkt und an der anderen Aussenlasche verriegelbar ist, was die Montage der Energieführungskette erheblich vereinfacht.

Weitere Einzelheiten und Vorteile des Gegenstandes der Erfindung ergeben sich aus der nachfolgenden Beschreibung der zugehörigen Zeichnungen, in denen zwei bevorzugte Ausführungsbeispiele der Erfindung dargestellt worden sind. In den Zeichnungen zeigen:

Fig. 1 ein Ketteglied mit eingesetzter Kassette und geschlossenem Schliessbügel in Richtung der Längsachse der gestreckten Energieführungskette gesehen;

Fig. 2 das Kettenglied gemäss Fig. 1 entlang der Linie II-II geschnitten;

Fig. 3 die Kassette aus Fig. 1 in der Draufsicht;

Fig. 4 das Kettenglied gemäss Fig. 1 bei geöffnetem Schliessbügel und einsatzbereiter Kassette in Richtung der Längsachse der gestreckten Energieführungskette gesehen;

Fig. 5 eine zerlegbare Kassette mit Durchbrüchen für einen runden und einen kastenförmigen Energieleiter in der Aufsicht;

Fig. 6 einen Ausschnitt einer Energieführungskette im Kümmungradius r in schematischer Darstellung.

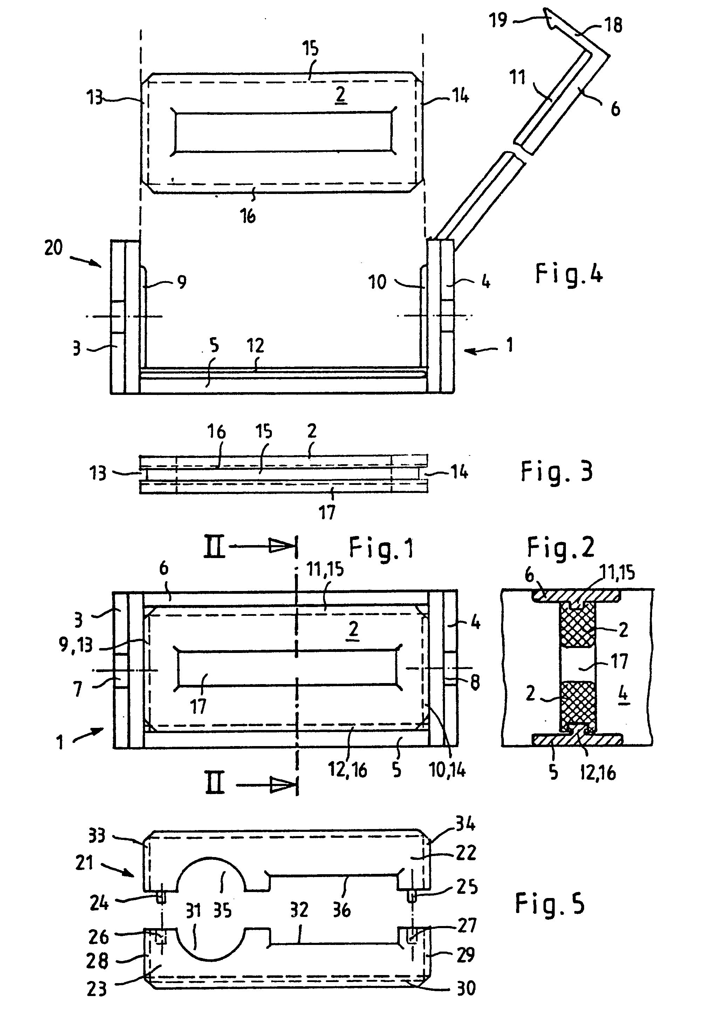

In den Fig. 1 und 2 ist ein Kettenglied 1 mit eingesetzter Kassette 2 dargestellt, welches aus einem U-förmigen Aufnahmeteil mit Aussenlasche 3, 4 einer Basis 5 und einem Schliessbügel 6 besteht. Das Kettenglied 1 ist an einem Ende beidseitig mit Gelenkbohrungen 7, 8 und am anderen Ende beidseitig mit nicht dargestellten Gelenkzapfen versehen, wobei Gelenkbohrungen und Gelenkzapfen den Aufbau einer Energieführungskette ermöglichen, indem Gelenkzapfen in die Gelenkbohrungen benachbarter Kettenglieder eigesetzt werden.

Die Kassette ist an ihrem Umfang allseitig abgestützt, so dass sie an einer Bewegung in der Zeichenebene gehindert ist. Bewegungen senkrecht zur Zeichenebene werden durch Führungstege 9, 10, 11 und einen Raststeg 12 an der Basis 5 sowie komplementär ausgebildete Führungsnuten 13, 14 15 und eine Rastnut 16 verhindert.

Zur Aufnahme eines oder mehrerer kastenförmiger Energieleiter ist die Kassette 2 mit einem Schlitz 17 versehen, der auf die Längsachse der gestreckten Energieführungskette ausgerichtet ist. Es können auch mehrere, im Querschnitt kreisrunde Energieleiter eingesetzt werden, deren Durchmesser nicht allzusehr von der Höhe des Schlitzes 17 abweichen sollte.

Wichtig ist, dass die Energieleiter in der neutralen Faser des Kettengliedes geführt werden, welche in einer, beide Gelenkachsen des Kettengliedes schneidenden Ebene liegt. Im dargestellten Fall wird davon ausgegangen, dass die Gelenkbohrungen 7, 8 und die Gelenkzapfen des Kettengliedes in gleichem senkrechten Abstand von einer Ebene parallel zur Basis 5 angeordnet sind, so dass die neutrale Faser in Höhe der Verbindungsachse der Gelenkbohrungen 7 und 8 liegt. Energieleiter, die innerhalb der Kettenglieder in Höhe der neutralen Faser geführt werden, unterliegen einem besonders geringen Verschleiss, da ihre Bewegungen innerhalb der Energieführungskette vernachlässigbar sind.

In der Fig. 4 ist der an der Aussenlasche 4 drehbar angelenkte Schliessbügel 6 in geöffneter Stellung dargestellt. Der Schliessbügel ist an seinem freien Ende mit einem Haken 18 versehen, der mit einer Nase 19 in einer Aussparung der Aussenlasche 3 verriegelbar ist. Bevor jedoch das Kettenglied zu einem Kastenprofil verschlossen wird, kann zur verschleissarmen Führung von Energieleitungen die Kassette 2 eingeschoben werden. Über Führungsnuten 13, 14 an ihren Seiten gleitet sie entlang Führungsstegen 9, 10 in die vorgesehene Stellung innerhalb des von den Schenkeln 3, 4 und der Basis 5 gebildeten Aufnahmeteils 20. An der Basis 5 rastet der Raststeg 12 in die Rastnut 16 der Kassette 2 ein. Hierdurch ist die Unverlierbarkeit der vormontierten Kassette auch bei geöffnetem Schliessbügel 6 gewährleistet und wird ein zusätzlicher Teil der, von den Energieleitern ausgehenden Kräfte in die Basis 5 des Kettengliedes 1 eingeleitet. Bei geschlossenem Schliessbügel 6 füllt schliesslich der Führungssteg 11 die Führungsnut 15 aus, so dass die Kassette 2 allseitig gesichert ist.

In der Fig. 5 ist eine Kassette 21 dargestellt, die vorteilhaft für die Aufnahme eines im Querschnitt kreisrunden und eines im Querschnitt rechteckigen Energieleiters verwendbar ist. Die Kassette 21 ist zweiteilig aus einem Oberteil 22 und einem Unterteil 23 aufgebaut, die mittels Führungsstiften 24, 25 und Führungslöchern 26, 27 aufeinander ausgerichtet werden. Bei Vorgabe geeigneter Passungsmasse der Führungsstifte und Führungslöcher können Oberteil 22 und Unterteil 23 auch unverlierbar vormontiert werden. Zur Vereinfachung der Montage wird zunächst das Unterteil 23 mit den Führungsnuten 28, 29 entlang der Führungsstege 9,10 eines Aufnahmeteils 20 eingeschoben und der Raststeg 12 mit der Rastnut 30 verrastet. Dann können die Energieleiter in die Halbrundnut 31 und die Rechtecknut 32 eingesetzt werden. Dann wird das Oberteil 22 mit Führungsnuten 33, 34 eingeschoben und zur Auflage auf das Unterteil 23 gebracht, wobei es die Energieleiter mit einer Halbrundnut 35 und einer Rechtecknut 36 einfasst. Oberteil 22 und Unterteil 23 werden schliesslich in bereits beschriebener Weise durch Verschliessen des Schliessbügels 6 gesichert.

Es sind auch andere Ausgestaltungen des Schliessbügels denkbar. So muss dieser nicht zwangsläufig einseitig an einer Aussenlasche angelenkt sein. Er kann beispielsweise auch beidseitig mit Haken und Nasen zur Verrastung in Aufnahmen der Aussenlaschen versehen sein.

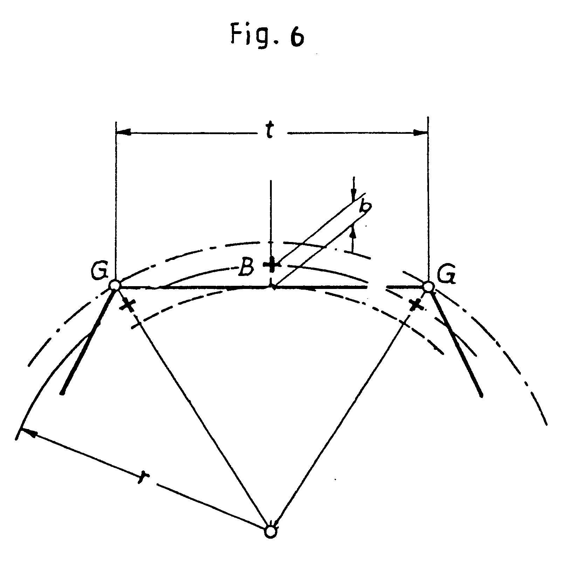

Das U-förmige Aufnahmeteil und der Schliessbügel werden zweckmässigerweise aus einem glasfaserverstärkten Kunststoff gefertigt. Derartige Grundkörper haben eine besonders hohe Stabilität. Die Kassetten können besonders vorteilhaft aus einem Massenkunststoff gespritzt werden, der den Energieleitern einen besonders geringen Reibungswiderstand entgegensetzt. Das Spritzverfahren ermöglicht es in besonders schneller Weise auf spezifische Kundenwünsche einzugehen. Die Energieführungskette in der Fig. 6 ist mit einem Krümmungsradius r verlegt und besteht aus Kettengliedern, die sich zwischen zwei Gelenkachsen G erstrecken. Wenn die Durchbrüche mit ihren Symmetrieachsen im Abstand b von einer beide Gelenkachsen G verbindenden Ebene haben, findet keine Relativbewegung der Energieleitungen in der Kassette statt. Dann ist die Bogenlänge B der Energieleitungen der Kettenteilung t gleich.

*Bezugszeichenliste*

1  Kettenglied
2  Kassette
3  Aussenlasche
4  Aussenlasche
5  Basis
6  Schliessbügel
7  Gelenkbohrung
8  Gelenkbohrung
9  Führungssteg
10  Führungssteg
11  Führungssteg
12  Raststeg
13  Führungsnut
14  Führungsnut
15  Führungsnut
16  Rastnut
17  Schlitz
18  Haken
19  Nase
20  Aufnahmeteil
21  Kassette
22  Oberteil
23  Unterteil
24  Führungsstift
25  Führungsstift
26  Führungsloch
27  Führungsloch
28  Führungsnut
29  Führungsnut
30  Rastnut
31  Halbrundnut
32  Rechtecknut
33  Führungsnut
34  Führungsnut
35  Halbrundnut
36  Rechtecknut
b  Abstand
r  Krümmungsradius
t  Kettenteilung
B  Bogenlänge

**Patentansprüche**

1. Energieführungskette zum Führen von Energieleitern, insbesondere Kabel und Schläuche, von einem festen Anschluss zu einem beweglichen Verbraucher, bestehend aus einer Vielzahl von Kettengliedern (1) aus einem U-förmigen Ausnahmeteil (20), dessen Schenkel Aussenlaschen (3, 4) bilden und einem Schliessbügel (6), der mit den freien Kanten bzw. Seiten der Aussenlaschen verbindbar ist, dadurch gekennzeichnet, dass bei geöffnetem Schliessbügel (6) eine komplementär geformte Kassette (2, 21) in das Aufnahmeteil (20) einsetzbar ist, die bei geschlossenem Schliessbügel (6) an ihrem Umfang allseitig abgestützt ist, dass die Kassette (2, 21) bei geschlossenem Schliessbügel (6) über Führungselemente — beispielsweise Führungsstege (9,10,11,12) und Führungsnuten (13,14,15,16) — formschlüssig mit dem Kettenglied (1) verbunden ist und dass die Kassette (2, 21) mit Durchbrüchen (17, 31, 32, 35, 36) versehen ist, die bei formschlüssig verbundener Kassette (2, 21) auf die Längsachse der gestreckten Energieführungskette ausgerichtet sind und die Energieleiter aufnehmen.

2. Energieführungskette nach Anspruch 1, dadurch gekezeichnet, dass die Kassette (2, 21) an mindestens zwei gegenüberliegenden Umfangsseiten über Führungsstege (9,10,11,12) und Führungsnuten (13,14,15,16) mit dem Aufnahmeteil (20) bzw. dem Schliessbügel (6) verbunden ist.

3. Energieführungskette nach Anspruch 1 oder 2, dadurch gekennzeichnet, dass die Kassette (2, 21) mit einem Raststeg (12) und einer Rastnut (16) an der Basis (5) des Aufnahmeteils (20) verrastbar ist.

4. Energieführungskette nach einem der Ansprüche 1 bis 3, dadurch gekennzeichnet, dass bei formschlüssig verbundener Kassette (2) die Durchbrüche (17) mit ihren Symmetrieachsen von einer beide Gelenkachsen des Kettengliedes schneidenden Ebene einen Abstand (b) haben, bei dem ein Krümmungsradius (r) der Energieführungskette die Bogenlänge (B) der Energieleitungen genau der Kettenteilung (t) entspricht.

5. Energieführungskette nach einem der Ansprüche 1 bis 4, dadurch gekennzeichnet, dass die Kassette (2, 21) aus einem weichen und gegenüber den Energieleitern besonders glatten Kunststoff — beispielsweise Polyäthylen — besteht.

6. Energieführungskette nach einem der Ansprüche 1 bis 5, dadurch gekennzeichnet, dass die Kassette (21) in einer Ebene teilbar ist, welche die Durchbrüche (31, 32, 35, 36) in Längsausdehnungsrichtung vollständig schneidet, wodurch die Kassette (21) in ein Oberteil (22) und ein Unterteil (23) zerlegbar ist.

7. Energieführungskette nach einem der Ansprüche 1 bis 6, dadurch gekennzeichnet, dass der Schliessbügel (6) an einer Aussenlasche (4) drehbar angelenkt und an der anderen Aussenlasche (3) verriegelbar ist.

## Claims

1. A drag chain for guiding energy conductors, more particularly cables and hoses, from a stationary connection to a moving load, the chain comprising a number of links (1) each embodied by a channel-section receiving part (20), whose arms are operative as outer members (3, 4), and a closing stirrup (6) connectable to the free edges or sides of the outer members, characterised in that when the closing stirrup (6) is open a holder (2, 21) of matching shape is introducible into the receiving part (20) and, with the stirrup (6) closed, is supported or borne all the way round its periphery, the holder (2, 21) is positively connected by way of guide elements, such as guide webs (9-12) and guide grooves (13-16), to the chain link (1) when the stirrup (6) is in the closed state, and the holder (2, 21) is formed with apertures (17, 31, 32, 35, 36) which, when the holder (2, 21) is in the positively connected state, are aligned on the longitudinal axis of the extended chain and which receive the energy conductors.

2. A chain according to claim 1, characterised in that the holder (2, 21) is connected to the receiving part (20) or the stirrup (6) on at least two opposite sides of the periphery by way of guide webs (9 - 12) and guide grooves (13 - 16).

3. A chain according to claim 1 or 2, characterised in that the holder (2, 21) can catch by means of a catch web (12) and a catch groove (16) on the base (5) of the receiving part (20).

4. A chain according to any of claims 1 - 3, characterised in that, with the holder (2) in the positively engaged state, the axes of symmetry of the perforations (17) are separated from a plane intersecting the two articulation axes of the link by distance (b) such that a curvature radius (r) of the chain is associated with an arc length (B) of the energy lines which corresponds exactly to chain pitch (t).

5. A chain according to any of claims 1 - 4, characterised in that the holder (2, 21) is made of a plastics, for example, polythene, which is soft and, relatively to the energy conductors, very smooth.

6. A chain according to any of claims 1 - 5, characterised in that the holder (21) is divisible in a plane which completely intersects the perforations (31, 32, 35, 36) in the direction of their lengthwise extent, so that the holder (21) is divisible into a top part (22) and a bottom part (23).

7. A chain according to any one of claims 1 - 6, characterised in that the closing stirrup (6) is rotatably articulated to one outer member (4) and lockable to the other outer member (3).

## Revendications

1. Chaîne conductrice d'énergie, pour le guidage de conducteurs d'énergie, en particulier de câbles et de tuyaux, depuis un raccord fixe jusqu'à un utilisateur mobile constituée par un grand nombre de maillons (1), par une pièce de logement (20) en forme de U, dont les branches forment des mailles de chaînes extérieures (3, 4) et par un étrier de fermeture (6), qui peut être relié aux bords ou aux côtés libres des mailles de chaînes extérieures, caractérisée en ce que lorsque l'étrier de fermeture est ouvert, une cassette (2, 21) formée de manière complémentaire peut être montée dans la pièce de logement (6) qui, lorsque l'étrier de fermeture (6) est fermé s'appuie de tous côtés sur son pourtour, en ce que la cassette (2, 21), l'étrier (6) étant fermé, est reliée mécaniquement au maillon (1) au moyen d'éléments de guidage — tels que des barrettes de guidage (9, 10, 11, 12) et des rainures de guidage (13, 14, 15, 16) par exemple — et en ce que la cassette (2, 21) est pourvue d'ajours (17, 31, 32, 35, 36) qui, lors de la liaison mécanique (2, 21), sont alignés suivant l'axe longitudinal de la chaîne de guidage d'énergie en position étirée et reçoivent les conducteurs d'énergie.

2. Chaîne conductrice d'énergie selon la revendication 1, caractérisée en ce que la cassette (2, 21) est reliée sur au moins deux faces en regard du périmètre à la pièce de logement (20) ou à l'étrier de fermeture (6) au moyen de barrettes de guidage (9, 10, 11, 12) et de rainures de guidage (13, 14, 15, 16).

3. Chaîne conductrice d'énergie selon une quelconque des revendications 1 ou 2, caractérisée en ce que la cassette (2, 21) peut être arrêtée au moyen d'une barrette crantée (12) et d'une rainure formant encoche (16) sur la base de la pièce de logement (16).

4. Chaîne conductrice d'énergie selon une quelconque des revendications 1 à 3, caractérisée en ce que, la cassette (2), étant reliée mécaniquement, les axes de symétrie des ajours (16) se trouvent à une distance (b) d'un plan recoupant les axes d'articulation du maillon telle que, pour un rayon de courbure (r) donné de la chaîne conductrice d'énergie correspond exactement au pas de chaîne (t).

5. Chaîne conductrice d'énergie selon une quelconque des revendications 1 à 4, caractérisée en ce que la cassette (2, 21) est constituée par une matière plastique molle et particulièrement lisse — telle que du polyéthane — en regard des conducteurs d'énergie.

6. Chaîne conductrice d'énergie selon une quelconque des revendications 1 à 5, caractérisé en ce que la cassette (21) peut être partagée suivant un plan qui recoupe entièrement les ajours (31, 32, 35, 36) dans le sens longitudinal d'extension, ce qui permet de décomposer la cassette (21) en une partie supérieure (22) et en une partie inférieure (23).

7. Chaîne conductrice d'énergie selon une quelconque des revendications 1 à 6, caractérisée en ce que l'étrier de fermeture (6) est articulé sur une maille extérieure (4), par rapport à laquelle il peut pivoter, et peut être bloqué sur l'autre maille extérieure (3).

Fig.4

Fig. 3

Fig.1

Fig.2

Fig.5

# Fig. 6